# EUROPEAN PATENT APPLICATION

(11) **EP 1 734 448 A2**
(43) Date of publication of application: **20.12.2006**
(21) Application number: 06018106.2
(22) Date of filing: 03.11.2004
(51) Int. Cl.: G06F 9/54

(54) **Installing method, network apparatus, identification information communicating method, information processing apparatus, connection information acquiring method, connection information displaying method, recording medium, and program**

(30) Priority: 05.11.2003 JP 2003375568; 05.11.2003 JP 2003375569
(62) Divisional of application: 04026090.3
(71) Applicant: SONY CORPORATION, Tokyo (JP)
(72) Inventor: Koyama, Masayoshi, Shinagawa-ku, Tokyo (JP)
(74) Representative: Müller - Hoffmann & Partner

(57) **Abstract**

A recording medium is provided which records an installation-assisting program in a manner readable by a computer, the installation-assisting program causing the computer to carry out the steps of: before execution of installation, acquiring a character string necessary for the installation from an external file; and referencing the acquired character string to proceed with the installation.

## Description

### BACKGROUND OF THE INVENTION

The present invention relates generally to a method and a program for installing hardware or software. More particularly, the invention relates to a network apparatus connected with an information processing apparatus over a network; to an identification information communicating method and an identification information communicating program for use with the network apparatus; to an information processing apparatus connected with a network apparatus over a network; and to a connection information acquiring method, a connection information displaying method, a connection information acquiring program, and a connection information displaying program for use with the information processing apparatus.

With computers coming into general use today, a growing number of users with relatively limited knowledge of the computers are confronted with the chores of installing peripheral devices or application programs into the computer of interest. Because the peripherals and applications are getting increasingly multifunctional, the task of installing them can be quite complicated.

Under the circumstances, device manufacturers and software venders have had their products furnished with programs (typically called installers) for assisting users in their installation work. These assisting programs enable users with limited computing knowledge to proceed easily with their task of installing additional resources into their computer.

The installers are generally created using dedicated preparatory programs. If the operating system is Windows (registered trademark), a program called InstallShield (registered trademark) is generally used to create installers. To create an installer requires collecting information such as the names of files to be needed upon execution of the installer, destinations to which to copy the files, and relevant settings. These items of information are written into the target installer.

When the installer thus prepared is executed, the items of information written therein are referenced so that the files necessary for causing the hardware or software of interest to function are copied and that the settings are changed where needed.

The description of installers varies from one operating system to another. That is, installers must be specific to each operating system. Installers also vary in their description depending on the type of the device to be used. It follows that as many installers as the number of the combinations of the hardware and software products involved are needed.

In the case of changes in any file names or settings described in installers, all installers involved must be prepared again from the beginning. This can be a very wasteful process in view of the time and cost already spent on creating the installers. In addition, installers typically utilize special functions, which makes it difficult for those not well-versed in installer preparation to maintain the installers that need to be serviced.

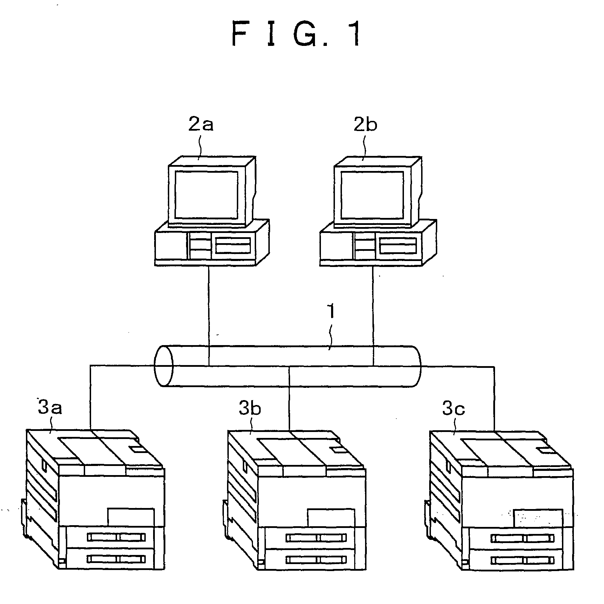

Today, many people connect their computers to peripheral devices over a network. Fig. 1 shows a typical configuration of a network system. In the system of Fig. 1, a network 1 is an Ethernet (registered trademark) setup. The network 1 is shown to have two computers 2a and 2b connected with three printers 3a, 3b and 3c.

For a computer to communicate with peripheral equipment over the network requires having the peripheral preinstalled into the computer. What follows is a description of a conventional installation procedure based on the communication protocol TCP/IP (Transmission Control Protocol/Internet Protocol).

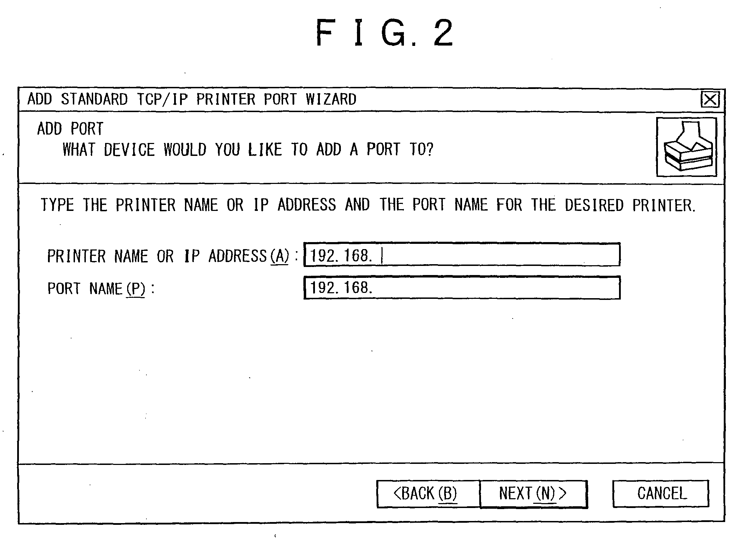

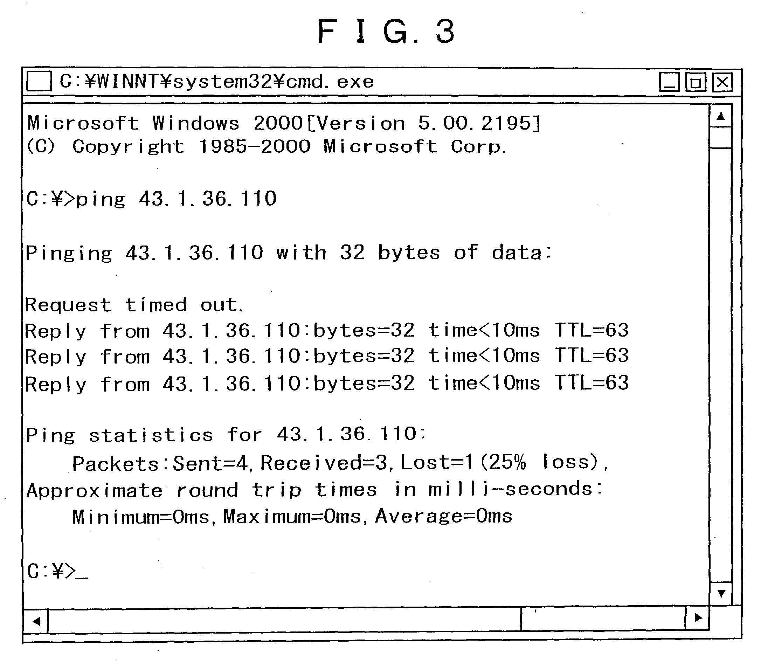

The user first acquires from a network administrator an IP address or a port name for the peripheral device to be installed. The user then enters the acquired IP address or port name into a wizard screen such as one shown in Fig. 2. At this point, the operating system transmits an echo command called "ping" to the established address in order to determine whether IP packets can reach the destination. Fig. 3 shows an example in which the "ping" command is issued by the operating system Windows (registered trademark).

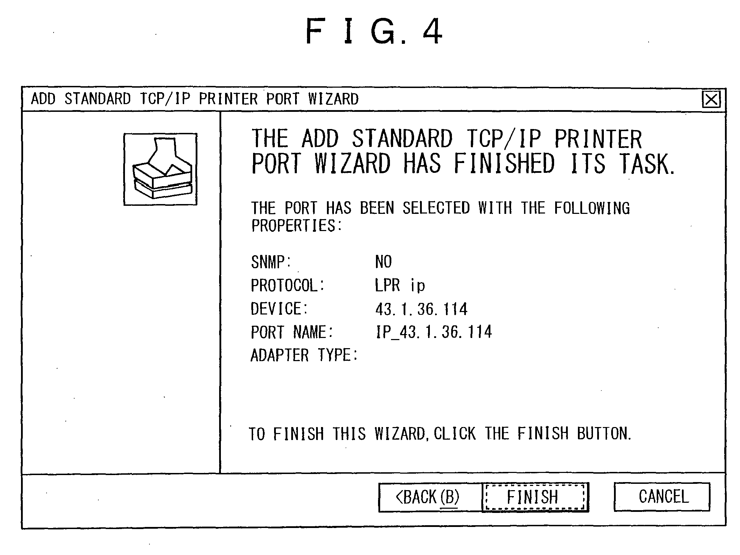

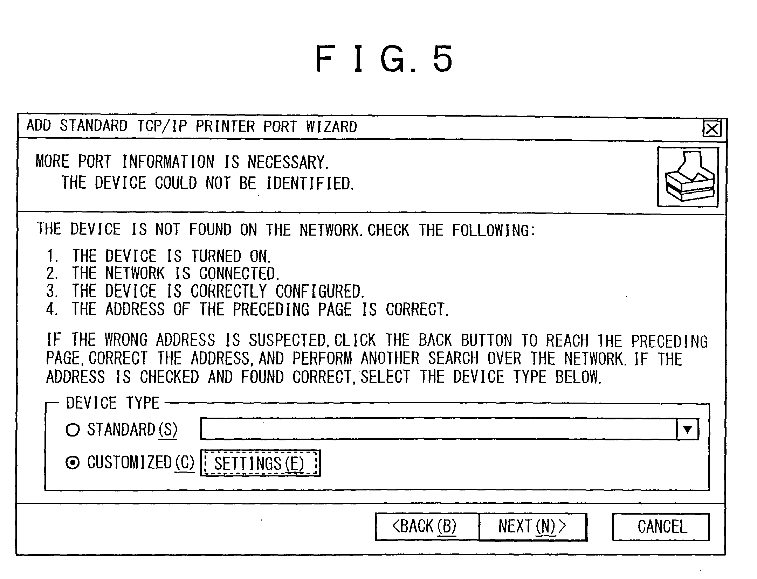

If a response is received in return for the echo command, the operating system determines that the target node exists and that the network software is active at least on the IP level. Following the determination, the operating system creates automatically a communication port and notifies the user of what has been prepared on a screen such as one shown in Fig. 4. If no response is received, the operating system waits for the user to enter more detailed setting through a screen such as one in Fig. 5 .

After creating the communication port, the operating system acquires a model name from the printer in question and installs a printer driver corresponding to the acquired model name into the computer. With the foregoing procedure completed, the computer can drive the suitably configured printer.

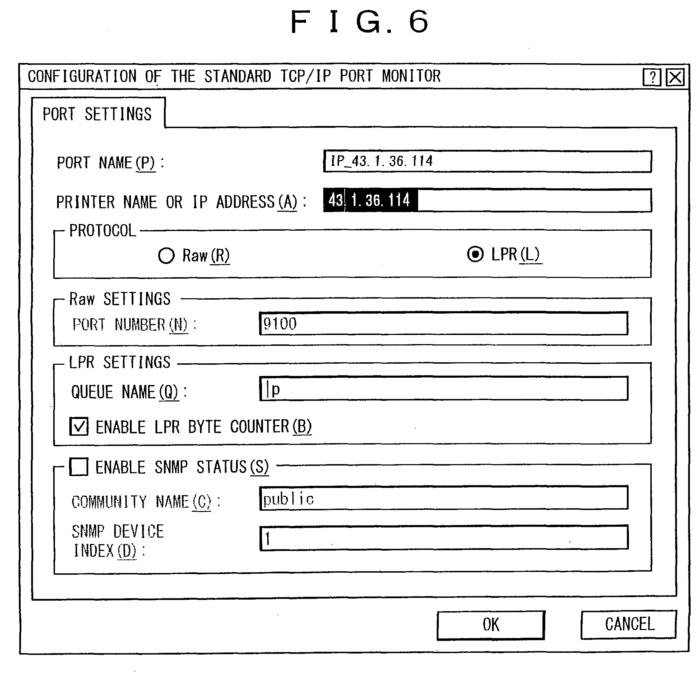

If the user-input information contains error or if the target printer is not being powered, then the operating system requests the user to make appropriate settings through a screen such as one shown in Fig. 6. However, it is difficult for the user with little knowledge of network administration to make the correct settings through that screen.

The technical problem above is common to all cases in which an additional network apparatus having an IP address needs to be installed into the computer.

### SUMMARY OF THE INVENTION

The present invention has been made in view of the above circumstances and provides inventive arrangements and improvements for solving the foregoing and other problems.

To achieve the foregoing and other objects in accordance with the purpose of the present invention, a technique is proposed whereby only general-purpose information that need not be varied depending on the hardware or operating system in use is written into the installer of interest while any character string subject to change is acquired from an external file.

Thus according to one aspect of the invention, there is provided an installing method including the steps of: before execution of installation, acquiring a character string necessary for the installation from an external file; and referencing the acquired character string to proceed with the installation.

When the character strings needed by installers are acquired from external files as proposed by the invention, it is possible to reduce considerably the time and cost spent conventionally by manufacturers and venders on maintaining the installers involved.

The present invention also proposes a technique whereby information about network apparatuses is collected in advance by resorting to broadcast communications so that a desired network apparatus may be installed using the collected information.

That is, according to another aspect of the invention, there is provided a network apparatus connected to an information processing apparatus over a network, the network apparatus including: a determining section for determining whether a search request including the network apparatus as an object of search is received; and a responding section which, if the received search request is found to include the network apparatus as the object of search, then transmits identification information about the network apparatus to a source having issued the search request.

According to a further aspect of the invention, there is provided an information processing apparatus connected to network apparatuses over a network, the information processing apparatus including: a search requesting section for broadcasting a search request to the network apparatuses over the network; an address acquiring section which, upon receipt of responses to the search request, acquires from header information in the responses address information about the network apparatuses having responded to the search request; and an identification information acquiring section which, upon receipt of the responses to the search request, acquires identification information about the network apparatuses having responded to the search request.

According to an even further aspect of the invention, there is provided an information processing apparatus connected to network apparatuses over a network, the information processing apparatus including: a connection mode acquiring section for acquiring connection modes of the network apparatuses through a screen display; and a list displaying section for creating a list of identification information about the network apparatuses having responded to a search request, before displaying the created list of the network apparatuses on a display device.

As outlined above, the network apparatus practiced as one embodiment of this invention is capable of readily offering information for installing the desired network apparatus into an information processing apparatus.

The information processing apparatus as another embodiment of this invention is capable of acquiring both identification information about the network apparatuses having responded to a search request and address information about these network apparatuses at the same time.

The information processing apparatus as a further embodiment of this invention presents the user with acquired identification allowing the user to identify easily what needs to be installed.

Other objects, features and advantages of the invention will become more apparent upon a reading of the following description and appended drawings.

### BRIEF DESCRIPTION OF THE DRAWINGS

Fig. 1 is a schematic view of a typical network system;
Fig. 2 is a schematic view of a GUI screen used conventionally for installation;
Fig. 3 is a list of "ping" commands;
Fig. 4 is a schematic view of a GUI screen that appears when a communication port has been automatically created;
Fig. 5 is a schematic view of a GUI screen that appears when the device to be configured is not found;
Fig. 6 is a schematic view of a GUI screen displayed so as to request the input of a correct IP address;
Fig. 7 is a conceptual view sketching how an installer is structured according to the invention;
Fig. 8 is a schematic view showing conceptually a processing procedure for an installer according to the invention;
Fig. 9 is a conceptual view showing how information necessary for preparing an installer is acquired over the network;
Fig. 10 is a block diagram depicting an internal structure of a computer;
Fig. 11 is a schematic view indicating a processing procedure carried out by an installer;
Fig. 12 is a schematic view also indicating the processing procedure carried out by the installer;
Fig. 13 is a schematic view of a file containing information necessary for installation;
Fig. 14 is an explanatory view showing how a company name is acquired;
Fig. 15 is an explanatory view showing how a model name is acquired;
Fig. 16 is an explanatory view showing how a hardware identification key is acquired;
Fig. 17 is an explanatory view showing how a driver file name is acquired;
Fig. 18 is an explanatory view of an example in which driver setting information is acquired;
Fig. 19 is an explanatory view showing how copy destination information is acquired;
Fig. 20 is a tabular view listing the meanings of values furnishing copy destination information;
Fig. 21 is a block diagram of another network system;
Fig. 22 is a flowchart of steps constituting a responding procedure carried out by a network apparatus;
Fig. 23 is a flowchart of steps constituting a search requesting procedure performed by an information processing apparatus;
Fig. 24 is a flowchart of steps constituting a list displaying procedure carried out by the information processing apparatus;
Fig. 25 is a block diagram indicating another internal structure of the computer;
Fig. 26 is a flowchart of steps constituting a processing procedure executed by the computer;
Fig. 27 is a block diagram depicting an internal structure of a network apparatus;
Fig. 28 is a flowchart of steps constituting a processing procedure carried out by the network apparatus;
Fig. 29 is a schematic view of a wizard screen through which to input the type of a connection cable;
Fig. 30 is a schematic view of a wizard screen through which to input selectively the mode of connection to the network; and
Fig. 31 is a schematic view of a wizard screen that displays a list of search results.

### DESCRIPTION OF THE PREFERRED EMBODIMENTS

### First embodiment

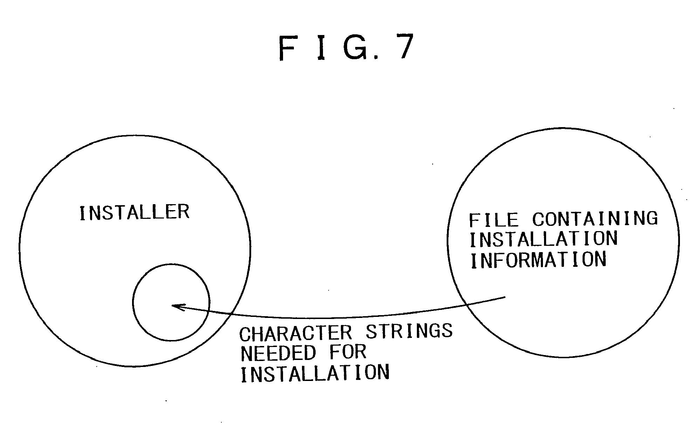

A first embodiment of this invention will now be described. As shown in Fig. 7, the invention may be practiced in the form of an installation-assisting program that helps install a target product by automatically acquiring from external files character strings needed for the installation.

The installation-assisting program of this invention works as an installer in two stages: preparatory processing stage, and main processing stage. The preparatory processing stage consists primarily of acquiring information which is not described in the installer (i.e., executing program) but is needed for execution of installation, the acquired information being used in the subsequent main processing. Manufacturers and venders determine at their discretion which character strings are to be described in the installer and which character strings are left out, i.e., to be acquired from external files.

Illustratively, information representative of a driver file name may be selected as a character string to be acquired externally. When that information is obtained from an external file, the installer need not be rewritten in case the driver is subsequently changed. The installer need not be modified as well if a change occurs in the driver name or in the number of drivers.

Information representative of driver setting information may also be selected as a character string to be acquired externally. When that information is obtained from an external file, the installer need not be rewritten in the event of changes in the driver setting information.

Information representative of a driver file copy destination may also be selected as a character string to be acquired externally. With that information obtained from an external file, the installer need not be rewritten in case a change occurs later in the driver file copy destination.

Information indicative of a company name, a model name, or a hardware identification key may also be selected as a character string to be acquired externally. With that information obtained from an external file, there is no need to prepare a dedicated installer specific to each company name or each model.

A plurality of external files may be tapped by the installation-assisting program in acquiring the character strings necessary for the installation. The names of the external files of interest should preferably be described beforehand in the installation-assisting program.

Alternatively, information specifying links to the files containing installation information may be described in the installation-assisting program. In that case, the installation-assisting program can access the files in question indirectly through the link information. The use of the link information provides for possible future changes in the files containing the installation information.

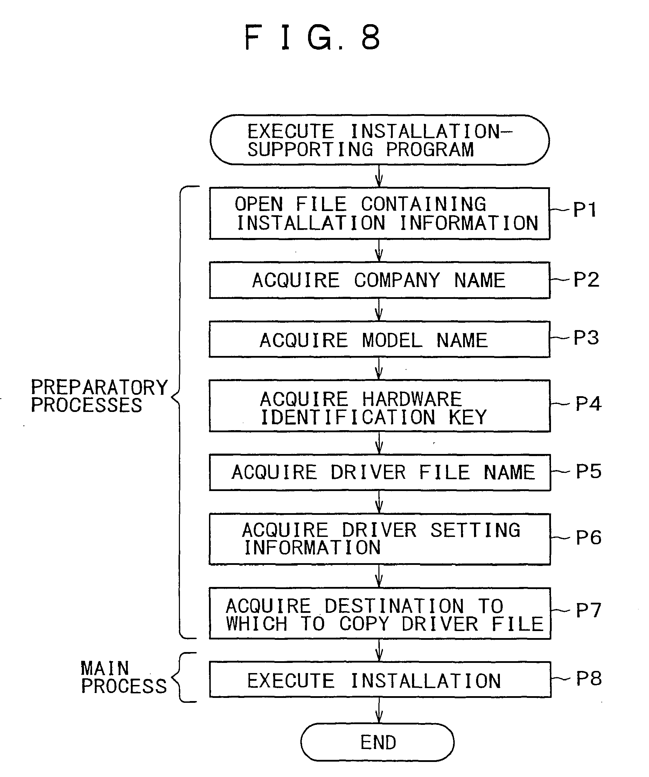

Fig. 8 shows a typical procedure whereby all information described above is acquired as character strings. The sequence of the steps for acquiring the respective character strings is shown as an example and not mandatory. When the installation-assisting program (called the installer where appropriate) is started, the preparatory processes are first carried out. The program initially opens the file containing the installation information (P1).

The installer then acquires a company name (P2), a model name (P3), a hardware identification key (P4), a driver file name (P5), driver setting information (P6), and a driver file copy destination (P7) successively from external files. When all information necessary for the installation is taken into the installer in the preparatory stage, the installer carries out its main process in the same manner as conventional installation processing (P8) .

The recording medium on which to record the installation-assisting program may be any one of magnetic storage media such as magnetic disks (flexible or hard disks) or magnetic tapes; optical storage media such as optical disks, optical tapes, or machine-readable bar codes; of semiconductor storage devices; or other physical devices or media designed to accommodate computer programs.

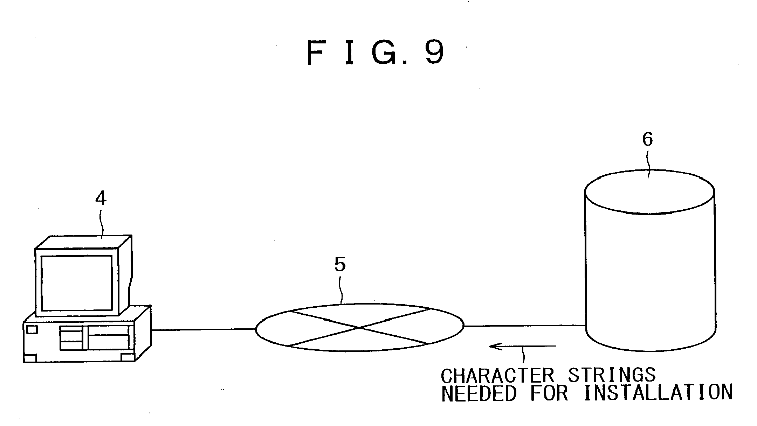

If the file containing the installation information is not found in a computer 4 executing the installer, the file may be acquired from an appropriate storage unit 6 connected to the computer 4 via a network 5 as shown in Fig. 9.

For example, it is possible to acquire the necessary information by gaining access to the manufacturer's or vender's URL (Uniform Resource Locator) described in the installer. It is also possible to obtain the needed information by running a search over the network using the file name describing the information required for the installation.

With that arrangement in place, the user can always acquire the latest installation information from administrative servers or other suitable sources. The manufacturers and venders, for their part, can keep their users' installation information up to date.

The installer may be adopted by any information processing apparatuses each incorporating a computer capable of installing hardware or software. In addition to the computer, the information processing apparatus may be provided in the form of various electronic appliances having computer capabilities, such as PDA's, game consoles, toy robots, mobile phones, and video recorders.

### More details of the first embodiment

How the first embodiment works in installing a printer into the computer will now be described. It is assumed that any methods or techniques not specifically illustrated or described hereunder are ones well-known to those skilled in the art.

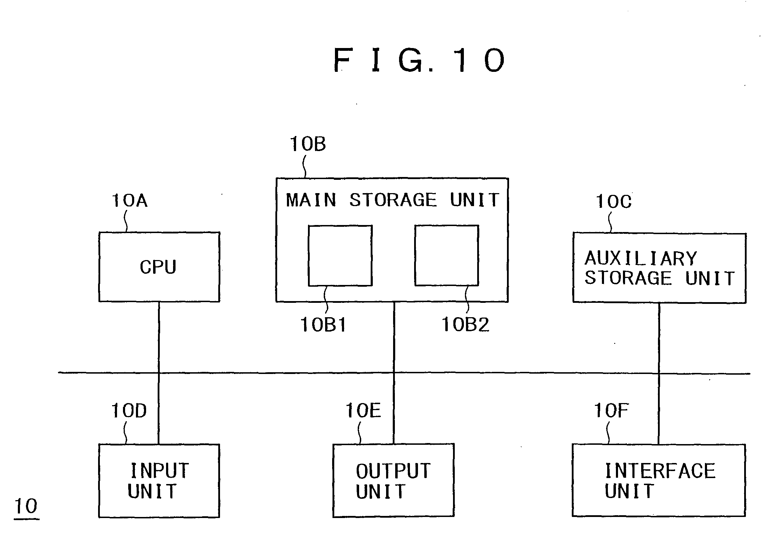

Fig. 10 shows an internal structure of a computer 10. The hardware of the computer 10 has a well-known structure. That is, the computer 10 is made up of a central processing unit (CPU) 10A, a main storage unit 10B, an auxiliary storage unit 10C, an input unit 10D, an output unit 10E, and an interface unit 10F.

The main storage unit 10B is typically a memory device such as a ROM (Read Only Memory) or a RAM (Random Access Memory). The main storage unit 10B accommodates basic programs for controlling data output and input to and from peripheral devices, an operating system, and application programs. The main storage unit 10B is also used as a work area for software execution. The installer makes use of the work area while being executed.

The main storage unit 10B includes a memory area 10B1 that stores the installer. Also contained in the main storage unit 10B is a memory area 10B2 that accommodates the character strings acquired prior to the main processing of the installer. The character strings written in the memory area 10B2 are referenced as needed during execution of installation. Although the memory areas 10B2 and 10B1 are shown separated in the structure of Fig. 10, this is not limitative of the invention. Alternatively, the memory area 10B2 may be part of the memory area 10B1.

The auxiliary storage unit 10C is illustratively a hard disk drive or a drive that accommodates a removable recording medium. For example, if the installer is recorded on a CD-ROM (Compact Disc Read Only Memory), then a CD-ROM drive is adopted as the auxiliary storage unit 10C. The recording medium may also be any one of magnetic storage media such as magnetic disks (flexible disks) or magnetic tapes; optical storage media such as optical disks, optical tapes, or machine-readable bar codes; semiconductor storage devices; or other physical devices or media designed to accommodate data and computer programs.

The input unit 10D is illustratively made up of a keyboard, a mouse, and/or other pointing device. Commands directed at the CPU 10A that executes software are entered through the input unit 10D.

The output unit 10E is illustratively composed of a display device and speakers. The display device typically displays a user interface screen of the installer.

The interface unit 10F is illustratively formed by a device for communicating with the printer, such as a USB (Universal Serial Bus) interface or a network interface. The computer 10 connects to the network through the network interface when acquiring files containing the installation information over the network.

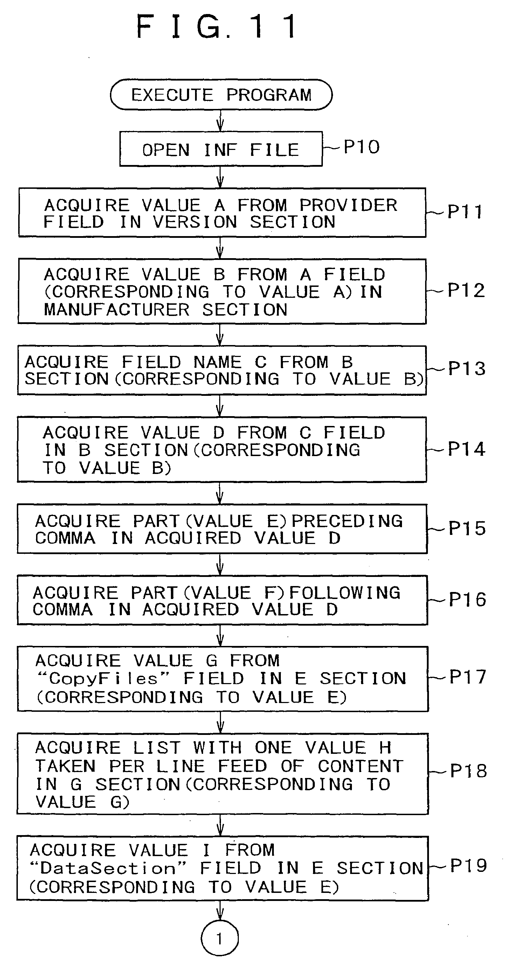

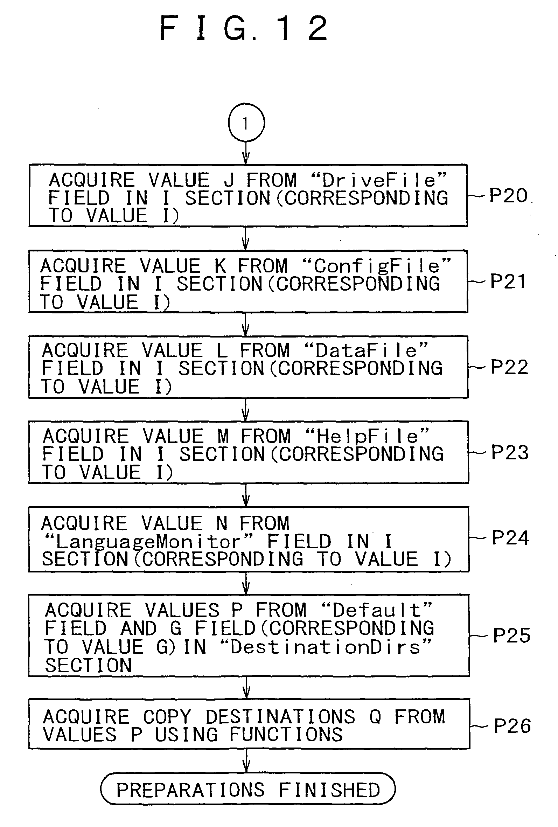

Figs. 11 and 12 show a typical processing procedure of the installer carried out by the computer 10. These figures indicate only the major steps of the procedure. These steps apply when the operating system is Windows (registered trademark). The procedure shown in Figs. 11 and 12 is carried out when the installer does not have such information as "company name," "model name," "hardware identification key (needed for plug-and-play operation)," "driver file name," and "driver file copy destination" described inside.

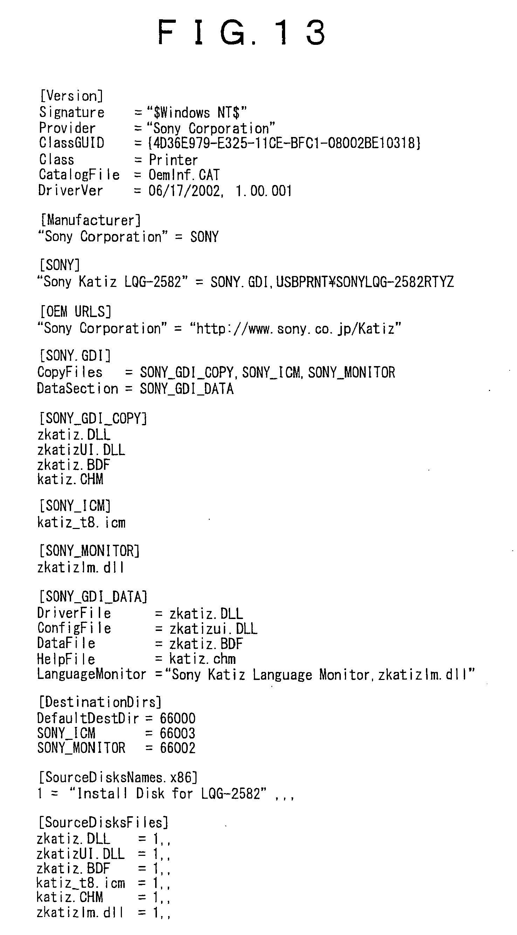

The installer, when started, first opens an initialization file stored on the same CD-ROM (P10) that contains the installer. Fig. 13 shows a typical initialization file (INF file). This is a file that contains the basic information needed by the installer.

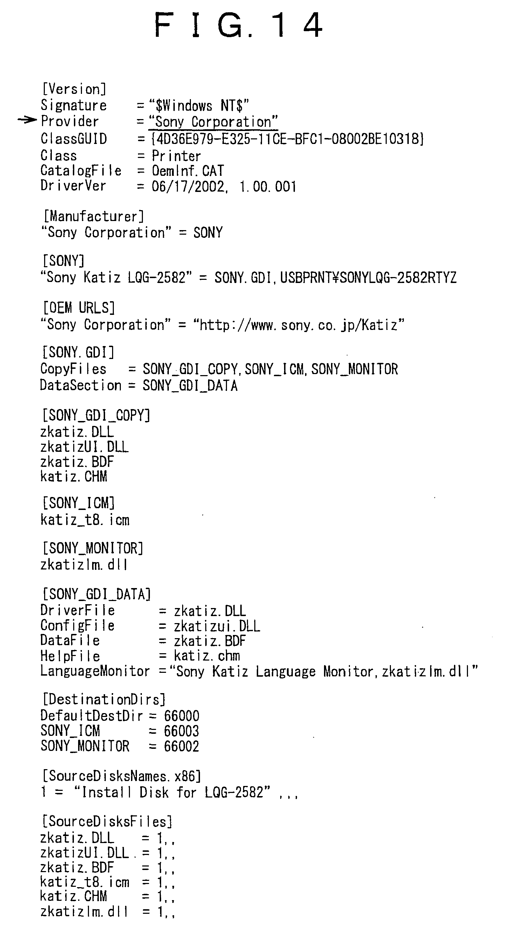

The installer then acquires a field value from the "Provider" field in the "Version" section (P11). This field contains a character string indicating the name of the manufacturer or vender of the printer in question. In this example, a company name "Sony Corporation" is described. Fig. 14 shows where the field is typically located.

The installer then refers to the "Manufacturer" section. The installer searches for the field that describes the same character string as the acquired company name, and obtains the value from the field (P12). In this example, the field contains "SONY (registered trademark)."

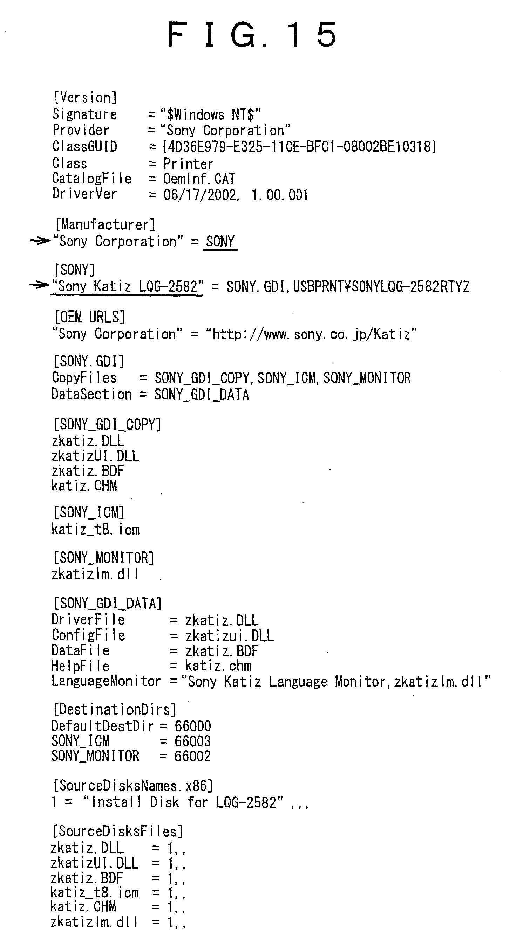

The installer searches for the same section name as the acquired character string "SONY," and acquires the detected field name as the model name of the printer (P13). In this example, a character string "Sony Katiz LQG-2582" is described as the model name. Fig. 15 shows where the character strings are typically located.

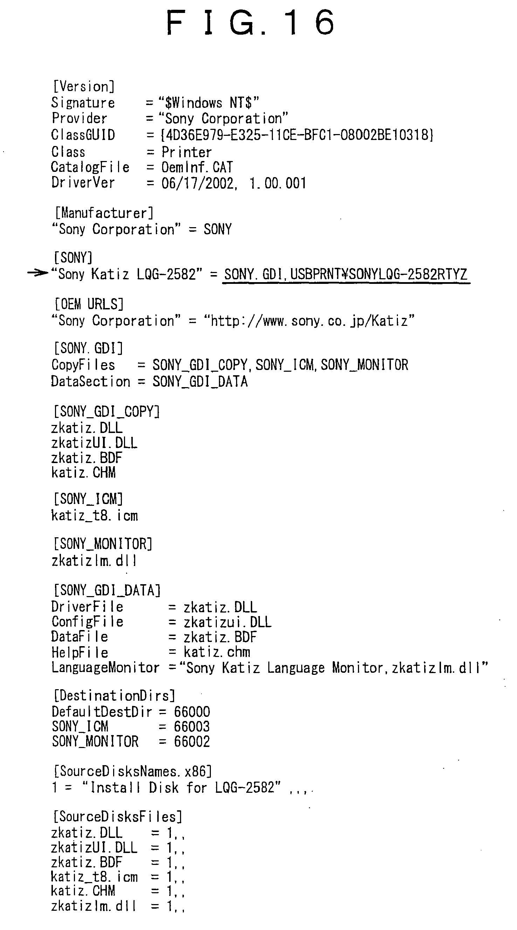

The installer searches for the same section name as character string "SONY," and acquires the detected field value (P14). In this example, a character string "SONY.GDI.USBPRNT¥SONYLQG-2582RTYZ" is described as the field value. Fig. 16 shows where this character string is typically located.

The installer acquires the value part preceding a comma in the field value acquired in process P14, i.e., "SONY.GDI" (P15). This value is used in a subsequent process.

The installer then acquires the value part following the comma in the field value acquired in process P14, i.e., "USBPRNT¥SONYLQG-2582RTYZ" (P16). This value constitutes a hardware identification key that is needed for the plug-and-play feature.

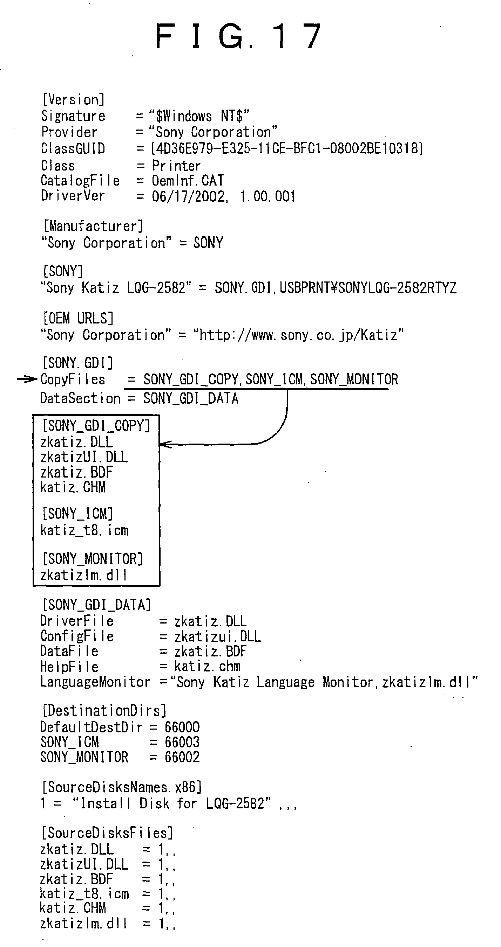

The installer then searches for the same section name as the field value "SONY.GDI" acquired in process P15. In this example, this section has two field names described in it. Of the two field names, the value in the "CopyFiles" field is obtained by the installer (P17). In this example, a character string "SONY_GDI_COPY, SONY_ICM, SONY_MONITOR" is described as the field value. Fig. 17 shows where this character string is typically located.

The field value above describes the character string indicating the location where the drive file is described. The field value is often separated into parts by commas. That is, the value often corresponds to a plurality of sections. How the field value is separated depends on whether the copy destinations are the same or different. The installer retrieves each of the character strings constituting the field value and delimited by commas, thus acquiring a file list of all character strings each corresponding to a section name (P18). In this example, the section names corresponding to the character strings "SONY_GDI_COPY," "SONY_ICM," and "SONY_MONITOR" are acquired to form the file list.

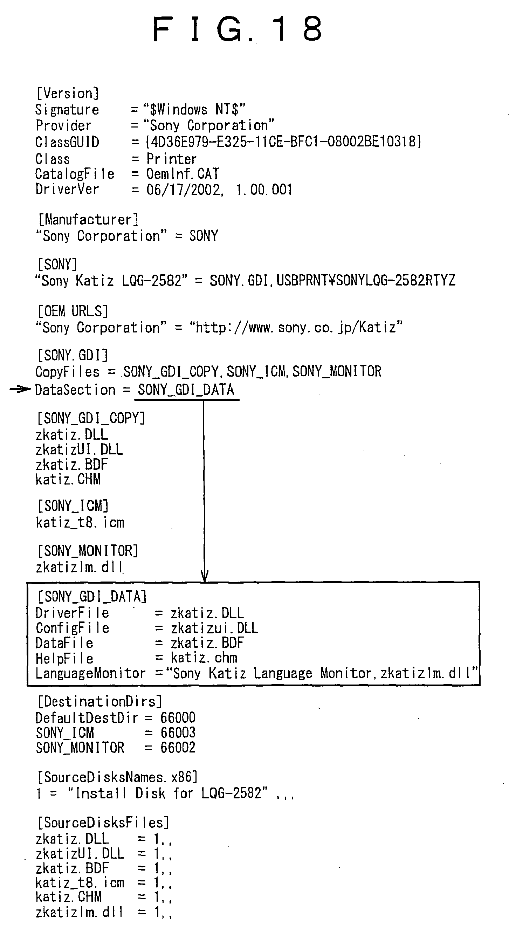

The installer then searches for the same section name as the field value "SONY.GDI" acquired in process P15. Of the two field names, the value in the "DataSection" field is acquired by the installer (P19). In this example, a character string "SONY_GDI_DATA" is described as the field value. Fig. 18 shows where this character string is typically located.

The installer searches for the same section name as the acquired character string "SONY_GDI_DATA," and obtains driver setting information from that section. In this example, the installer acquires a field value "zkatiz.DLL" from the "DriveFile" field (P20). Likewise, the installer obtains a field value "zkatizui.DLL" from the "ConfigFile" field (P21).

Similarly, the installer acquires a field value "zkatiz.BDF" from the "DataFile" field, a field value "katiz.chm" from the "HelpFile" field, and a field value "Sony Katiz Language Monitor,zkatizlm.dll" from the "LanguageMonitor" field (P22 to P24).

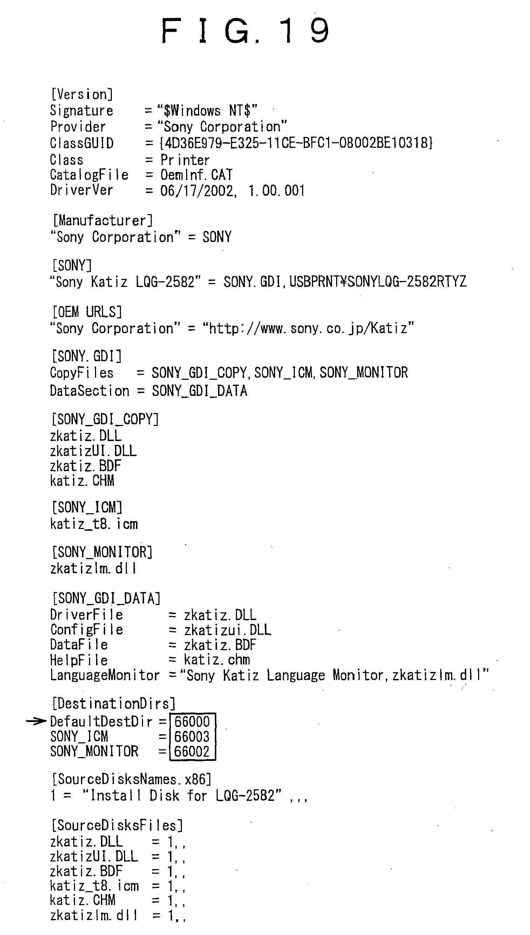

Thereafter, the installer searches for the "DestinationDirs" section, and acquires the values from descriptive parts having the same field names as the character strings constituting the field value obtained in process P17, or from the "DefaultDestDir" field (P25). Fig. 19 shows where the character strings are typically located.

The "DestinationDirs" section indicates the destination to which to copy the driver. In this example, the installer acquires a field value "66000" corresponding to the "DefaultDestDir" field, a field value "66003" corresponding to the "SONY_ICM" field, and a field value "66002" corresponding to the "SONY_MONITOR" field.

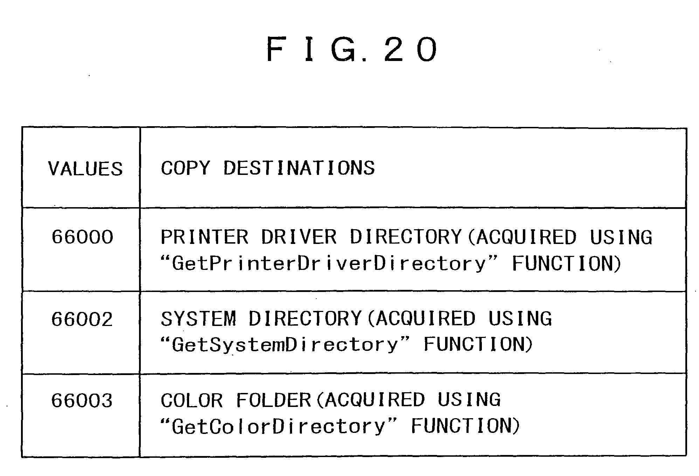

After obtaining the field values in process P25, the installer acquires the copy destination for each driver file using the functions indicated in Fig. 20 (P26). With this process finished, the installer has acquired all necessary information from the initialization file. After this, files are copied and settings are modified as needed by referencing the obtained information while the installation is in progress.

As described, only the general-purpose description is included in the installer while the necessary information is arranged to be automatically collected from external files. This method drastically reduces the amount of efforts expended on maintaining the installer. The manufacturer or vender offering the installer can furnish the product with a user-friendly graphic interface screen allowing the user to make detailed settings according to his or her needs.

If the number of files is changed or file names are modified during development of the product, the manufacturer or vender need only have the relevant information reflected in the INF file, which facilitates product maintenance. The inventive arrangement drastically reduces the need for maintaining the installer, so that the probability of defects resulting from maintaining the installer settings is appreciably lowered.

### Other variations of the first embodiment

Whereas the above-described first embodiment of the invention was arranged to install the printer into the computer, the embodiment may also be used to install into the computer electronic appliances other than printers, as well as software. Illustratively, the embodiment may be arranged to install into the computer electronic equipment such as scanners, combination scanner-printer machines, fax machines, LAN cards, modems, recording medium drives, projectors, game consoles, digital cameras, image pick-up devices, video recorders, video players, audio equipment, storage devices, and information processing apparatuses.

The variations above apply illustratively where the operating system is Windows NT (registered trademark). Alternatively, the embodiment may be utilized where other operating systems are in use.

### Second embodiment

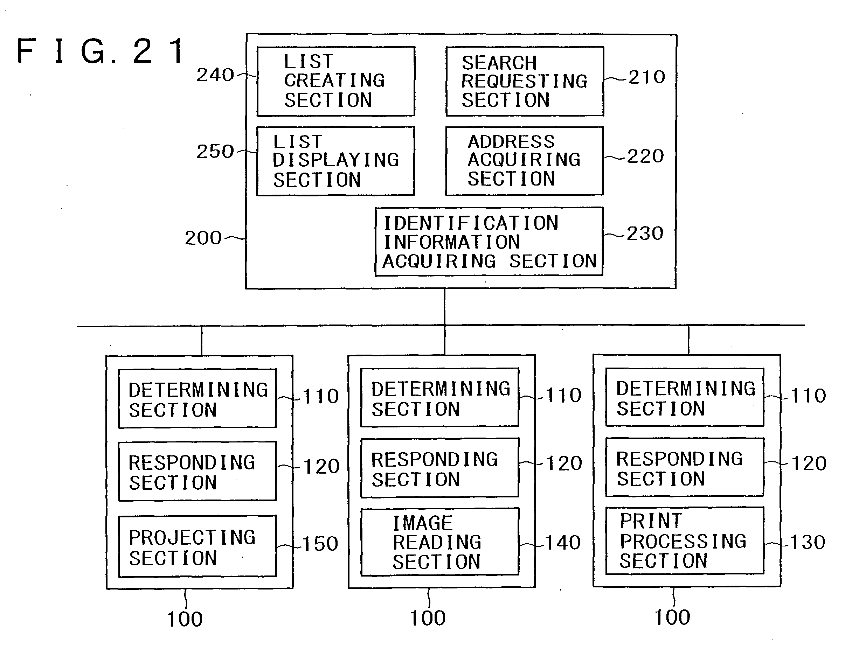

A second embodiment of this invention will now be described. Fig. 21 shows a typical network system according to this invention. The network system comprises network apparatuses 100 to be installed, and an information processing apparatus 200 into which to install a network apparatus 100. The information processing apparatus 200 is also a network apparatus.

### Network apparatus

As one variation of the invention, the network apparatus 100 connected to the information processing apparatus 200 via the network has the capability of communicating identification information about this network apparatus 100 to the connected information processing apparatus 200. More specifically, the network apparatus 100 includes a determining section 110 and a responding section 120. The determining section 110 determines whether or not a search request having the apparatus 110 as its object of search is received. When the received search request is found to have the network apparatus 110 as its object of search, the responding section 120 transmits identification information about this apparatus 110 to a source having issued the search request.

The search request is a broadcast communication issued on a one-to-n (n is a natural number) basis. Besides covering the network as a whole, broadcast communications may also be directed to all network apparatuses within a predetermined range of the network in what is called a multicast operation. Broadcast communications are also categorized into local broadcast and direct broadcast. Direct broadcast involves specifying different IP networks for broadcasting. In the case of multicast, the number of the group within which the search request is issued is also communicated.

Described in the search request is the type of network apparatus from which to expect a response, along with the range of the search. Illustratively, the type of network apparatus is described as information specifying electronic equipment such as printers, scanners, combination scanner-printer machines, projectors, game consoles, digital cameras, image pick-up devices, video recorders, video players, other image processing apparatuses, audio equipment, storage devices, and information processing apparatuses. The type of apparatus may also be described as information specifying all network apparatuses. The determining section 110 determines whether the apparatus hosting the section 110 should respond to the search request.

If this network apparatus 100 is found to be the object of the search request, then the responding section 120 transmits identification information about the apparatus 100 to the source having issued the search request. The request source is identified by the source address in the header part of the request.

The outgoing data sent by the responding section 120 is furnished with a transmission source address as part of a process carried out in accordance with the communication protocol in use. On receiving such a response to the search request, the search request transmitting side can acquire the address of the responding apparatus on the network.

The identification information transmitted by the responding section 120 should preferably be information such that the user can identify the responding apparatus in a list of the identification information collected by the search request transmission source. Illustratively, a model name, a printer name (friendly name), an identification name, a manufacturer name, or a vender name is transmitted as the identification information about the responding apparatus.

The printer name (friendly name) is illustratively a name used as a trademark or an emblem. The identification name is any name that the user may come up with. The responding section 120 communicates information that is visually verifiable or identifiable as the identification information. The communication of such identification information allows users of all levels of computer-related knowledge to proceed with product installation with ease.

The network apparatus 100 is an apparatus equipped with the capability of communicating with the network. The network apparatus 100 is illustratively an apparatus which includes a print processing section 130 for processing print data supplied by the information processing apparatus 200. The print processing section 130 controls a print mechanism (e.g., print head) to print on sheets of paper, films, and other objects. Printing may be done either monochromatically or in color, covering documents, photographs, graphics and other image data.

The network apparatus 100 also includes an image reading section 140 that optically reads images. In this respect, the network apparatus 100 may illustratively be a scanner or a fax. The apparatus 100 may also be one which includes both the print processing section 130 and the image reading section 140, typically built as a copy machine or a combination scanner-printer. The network apparatus 100 may also be in any other form if it comprises equivalent capabilities.

The network apparatus 100 may also include a projecting section 150 that optically projects images. Illustratively, the apparatus 100 may be a projector that projects images received from the information processing apparatus 200 onto a screen. This capability is useful in making up a conference system or a mass learning system.

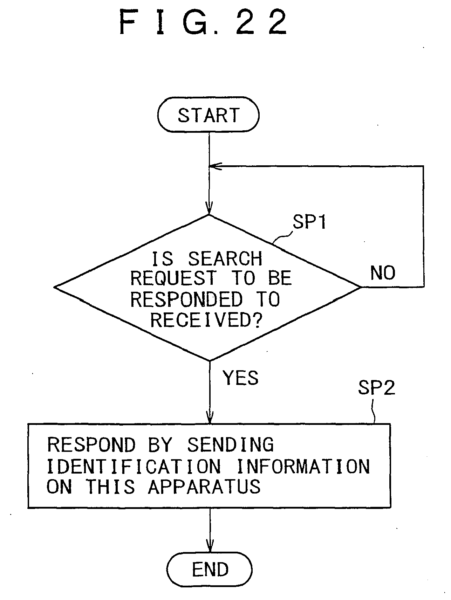

The capabilities of the determining section 110 and responding section 120 may be implemented in the form of a method and a program for communicating identification information as other variations of the invention. Fig. 22 shows a processing procedure carried out by the network apparatus 100. As shown in Fig. 22, the network apparatus 100 performs two steps: step SP1 in which a check is made to determine whether a search request having this apparatus as its object of search is received, and step SP2 in which identification information about this apparatus is transmitted to the source having issued the search request.

Executing the processing procedure above allows the network apparatus 100 to communicate necessary information to the information processing apparatus 200. Where the network apparatus 100 is implemented in the form of a computer system, the processing procedure of Fig. 22 should preferably be carried out as firmware or as an application program of the system.

### Information processing apparatus (with the capability of collecting identification information)

As another variation of this invention, the information processing apparatus 200 is provided with the capability of collecting identification information from network apparatuses 100 that may be connected to the processing apparatus 200 via the network.

More specifically, the information processing apparatus 200 includes a search requesting section 210, an address acquiring section 220, and an identification information acquiring section 230. The search requesting section 210 broadcasts a search request over the network. Upon receipt of a response to the search request, the address acquiring section 220 acquires address information about the network apparatus 100 having responded to the search request, from header information in the response. On receiving the response to the search request, the identification information acquiring section 230 acquires identification information about the network apparatus 100 having responded to the request.

As mentioned above, the search requesting section 210 sends out its search request on a broadcasting basis. The content of the search request is determined upon receipt of the information about the network apparatus to be installed anew. Illustratively, the request content is determined by the installer. The installer is provided not only as an application program but also as firmware or as part of the capabilities of the operating system in use.

Given a response to the search request, the address acquiring section 220 acquires the network address of the network apparatus having responded to the request from a transmission source address part in the header of the response. The acquired address is used in establishing a communication port. The identification information acquiring section 230 acquires identification information about each of the network apparatuses having responded to the search request. The identification information thus obtained is presented to the user in the form of a list.

The information processing apparatus 200 should preferably possess a display controlling section that causes a display device to display the identification information about the acquired network apparatuses in list form. Viewing the listed identification information allows the user to select a desired network apparatus to be installed on the basis of the visually verifiable or identifiable information.

Preferably, the information processing apparatus 200 should also have an identification information converting section that converts the identification information about the acquired network apparatuses from one format to another. The identification information converting section is used illustratively to convert the acquired identification information of diverse formats into the information of a unified format. The identification information converting section is also useful for the user to covert the displayed information into an easy-to-verify display format.

The identification information converting section should preferably include a conversion table that defines relations of correspondence between the identification information of one format and the identification information of other formats. In such a setup, the identification information converting section converts the information of one format directly into the information of another format by use of the conversion table. Alternatively, it is possible to query other apparatuses on the network so as to obtain their identification information to be associated with the acquired identification information. In this case, the identification information converting section carries out processes to retrieve relevant information from an external apparatus or apparatuses (e.g., from a database of the vender or manufacturer in question) based on the identification information acquired from the responses to the query.

Preferably, the information processing apparatus 200 should also include a port adding section that adds a port for communication with a network apparatus selected by the user from the listed network apparatuses. With the port adding section furnished, there no need for the user to perform further input work to choose a network apparatus by referring to the listed information. That is, the user need only select the desired network apparatus from the displayed list.

The information processing apparatus 200 is defined here as an apparatus which has the ability to communicate over the network and which is structured to accommodate additional hardware or software. In other words, the information processing apparatus 200 is an apparatus into which new hardware and software may be incorporated as needed. In that respect, the information processing apparatus 200 may be not only the above-described network apparatus but also any of other electronic devices comprising computer equipment or having computing capabilities.

The search requesting section 210, address acquiring section 220, and identification information acquiring section 230 described above may alternatively be implemented in the form of a method and a program for acquiring connection information as other variations of this invention.

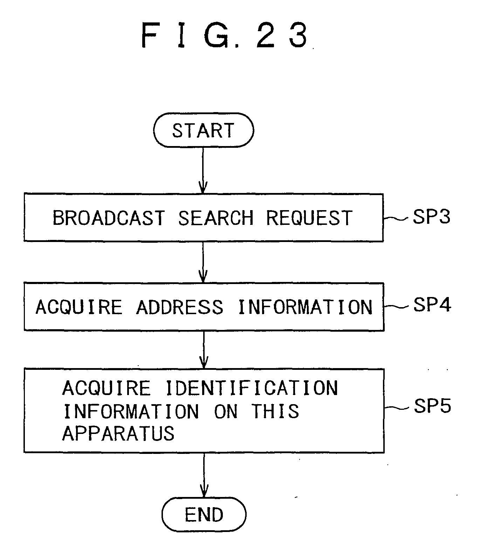

Fig. 23 is a flowchart of steps constituting a processing procedure performed by the information processing apparatus 200. As shown in Fig. 23, the information processing apparatus 200 performs three steps: step SP3 in which a search request is broadcast over the network; step SP4 in which, upon receipt of a response to the search request, address information about the network apparatus having responded to the request is acquired from the header in the response; and step SP5 in which identification information about the network apparatus having responded to the search request is acquired upon receipt of the response to the request.

With the above steps carried out, the information processing apparatus 200 can install the responding network apparatus easily. Where the information processing apparatus 200 is implemented as a computer system, the processing procedure of Fig. 23 should preferably be executed either as firmware or as an application program.

### Information processing apparatus (with the user interface capability)

As another variation of this invention, the information processing apparatus 200 connected to the network apparatus 100 via the network is provided with the ability to offer a user interface that allows the user to proceed with installation by making selective operations solely through a display screen.

More particularly, the information processing apparatus 200 is furnished with a list creating section 240 and a list displaying section 250. The list creating section 240 creates a list of identification information about the network apparatuses having responded to a search request. The list displaying section 250 displays the list thus created on the display device.

In creating the list, the list creating section 240 rearranges by item the identification information collected form the network apparatuses. At this point, the list may be created either from all identification information acquired or from part of the collected identification information. It is also possible to create the list by including in it the address information obtained from the network apparatuses having responded to the search request. As another alternative, the items to be include in the list may be selected as desired by the user. Since the list is ultimately presented to the user, it should preferably be created in an easy-to-verify format.

The list displaying section 250 displays a list of the network apparatuses 100 having responded to a search request transmitted to an indefinite number of network apparatuses, along with the identification information about the responding network apparatuses 100. The identification information displayed in visually verifiable or identifiable fashion allows the user to choose easily the necessary network apparatus to be installed.

Preferably, the information processing apparatus 200 should also include a port adding section that adds a port for communicating with a network apparatus selected by the user from the listed network apparatuses. With the port adding section furnished, there no need for the user to perform further input work to choose a network apparatus by referring to the listed information. That is, the user need only select the desired network apparatus from the displayed list.

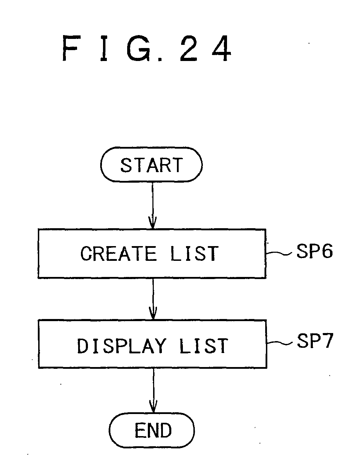

The capabilities of the list creating section 240 and list displaying section 250 may be implemented in the form of a method and a program for acquiring connection information as other variations of this invention. Fig. 24 is a flowchart of steps constituting a processing procedure carried out by the information processing procedure 200. As shown in Fig. 24, the information processing apparatus 200 performs two steps: step SP6 in which a list is created out of the identification information about the network apparatuses having responded to a search request; and step SP7 in which the list thus created is displayed on the display device.

Executing the steps above enables the information processing apparatus 200 to install the selected network apparatus with ease. Where the information processing apparatus 200 is implemented as a computer system, the processing procedure of Fig. 24 should preferably be executed either as firmware or as an application program.

### Typical network system

What follows is a description of a typical network system in which a printer functions as a network apparatus and a computer as an information processing apparatus. This is typically the case where a network printer is installed into the computer. The network system is configured illustratively as shown in Fig. 21.

It is assumed that any methods or techniques not specifically illustrated or described hereunder are ones well-known to those skilled in the art. In the description that follows, the network system embodying the invention is implemented as a software product. Obviously, the software in question can be replaced by hardware of equivalent capabilities.

Where the inventive network system is to be implemented by hardware, it can be built by use of integrated circuits such as application specific integrated circuits (ASIC), modules, units, or other devices known to the applicable technical field.

### Computer

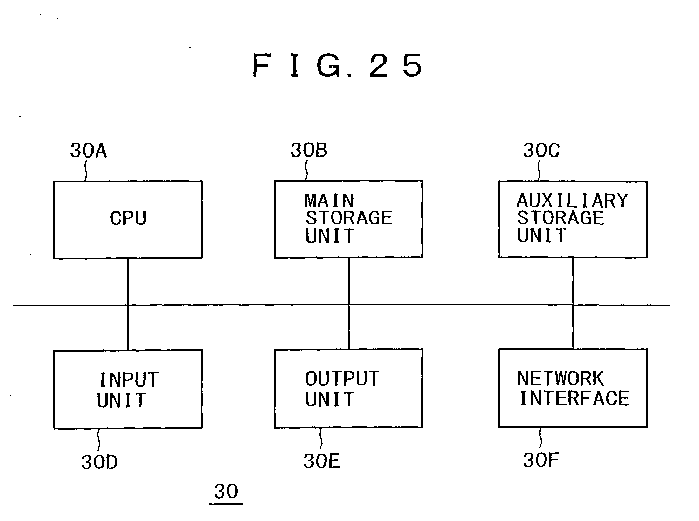

Fig. 25 indicates a typical structure of another computer 30. The hardware of this computer has a well-known structure. The computer 30 is made up of a central processing unit (CPU) 30A, a main storage unit 30B, an auxiliary storage unit 30C, an input unit 30D, an output unit 30E, and a network interface 30F.

The main storage unit 30B is typically a memory device such as a ROM (Read Only Memory) or a RAM (Random Access Memory). The main storage unit 30B accommodates basic programs for controlling data output and input to and from peripheral devices, an operating system, and application programs. The main storage unit 30B is also used as a work area for software execution. The installer makes use of the work area while being executed.

The auxiliary storage unit 30C is illustratively a hard disk drive or a drive that accommodates a removable recording medium. For example, if the installer is recorded on a CD-ROM (Compact Disc Read Only Memory), then a CD-ROM drive is adopted as the auxiliary storage unit 30C. The recording medium may also be any one of magnetic storage media such as magnetic disks (flexible disks) or magnetic tapes; optical storage media such as optical disks, optical tapes, or machine-readable bar codes; semiconductor storage devices; or other physical devices or media designed to accommodate data and computer programs.

The input unit 30D is illustratively made up of a keyboard, a mouse, and/or other pointing device. Commands directed at the CPU 30A that executes software are entered through the input unit 30D.

The output unit 30E is illustratively composed of a display device and speakers. The display device typically displays a user interface screen of the installer.

The network interface 30F is illustratively formed by a interface for communicating with the network. With this embodiment, search requests are sent through the network interface 30F to search for network printers connected to the network, and responses to the requests are received through the interface 30F.

The search requests and the responses thereto are sent and received through the network interface 30F under UDP (User Datagram Protocol). With this embodiment, the network interface 30F is further used to transmit print data to the network printer under TCP/IP (Transmission Control Protocol/Internet Protocol).

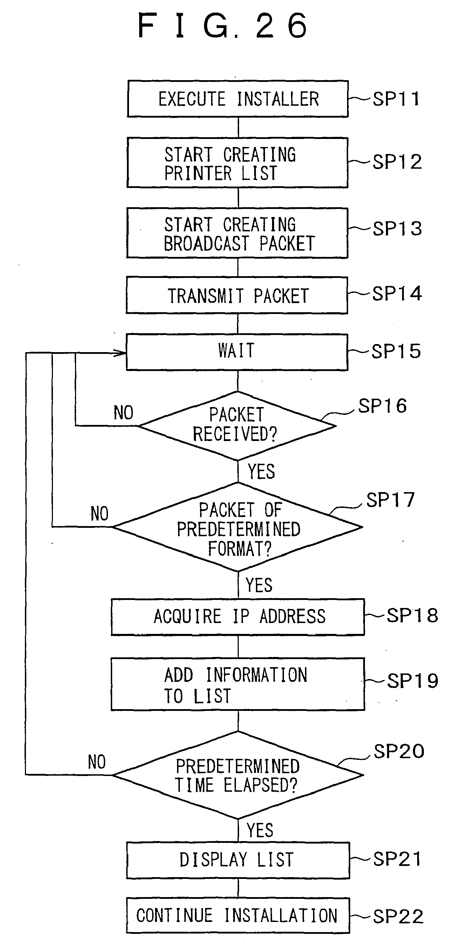

Fig. 26 is a flowchart of steps constituting an installer processing procedure executed by the computer 30. Fig. 26 indicates only the major steps of the procedure.

The installer is started automatically when the CD-ROM carrying the installer is loaded into the CD-ROM drive in SP11. With the installer started up, the display device displays an initial screen designed to accepts the user's input operations.

When installation of a network printer is selected on the initial screen, the installer starts creating a list of network printers in step SP12. The installer then creates a broadcast packet to be transmitted over the network in step SP13. The broadcast packet constitutes the above-described search request. In this example, a character string "Find¥nPrinter¥n" is described in a data area of the packet in order to find network printers.

With the broadcast packet completed, the installer transmits the packet to a specific port number in step SP14. The transmission is executed under the UDP protocol. Although less reliable as a protocol than TCP, the UDP protocol stipulates simpler communication proceedings so that communications can be accomplished at a higher speed. In other words, the UDP protocol allows the transmission to finish in a shorter time period than the TCP protocol.

Thereafter, the installer waits for a response packet to arrive over the network in step SP15. In step SP16, the installer determines whether a packet is received. If no packet is found received, the installer returns to step S15 and the routine is repeated until the receipt of a packet is ascertained.

When a packet is found to be received in step SP16, the installer goes to step SP17. In step SP17, the installer determines whether the received packet has a predetermined format. Only the response packet meeting this requirement is allowed to filter in. If in step SP17 the received packet is not found to have the predetermined format, then the installer returns to step SP15.

When a packet of the predetermined format is found to be received in step SP17, the installer goes to step SP18. In step SP18, the installer acquires an IP address from the header of the response packet. Thereafter, the installer acquires identification information about the network printer from the response packet. Illustratively, the installer obtains such information as the model name of the network printer, firmware version information, and friendly name of the printer. In step S19, the installer adds the acquired identification information to the list being created.

With the identification information added to the list, the installer in step SP20 determines whether a predetermined time has elapsed. If the predetermined time is not found to have elapsed yet, the installer returns to step SP15 and repeats the subsequent steps. During the repeating of the steps, the installer creates the list of the network printers which are located actively on the network with their network software turned on at least on the IP level.

When the predetermined time is found to have elapsed in step SP20, the installer displays the completed list on the screen of the display device in step SP21. This list is arranged in a manner offering the user easy verification of the acquired identification information. An interface more user-friendly than the conventional tree display or IP address display is thus implemented.

Thereafter, the installer waits for the user to choose from the displayed list the desired network printer to be installed. When the selection of the printer by the user is ascertained, the installer continues to install the selected network printer in step SP22. More specifically, the installer copies the corresponding driver file.

### Printer

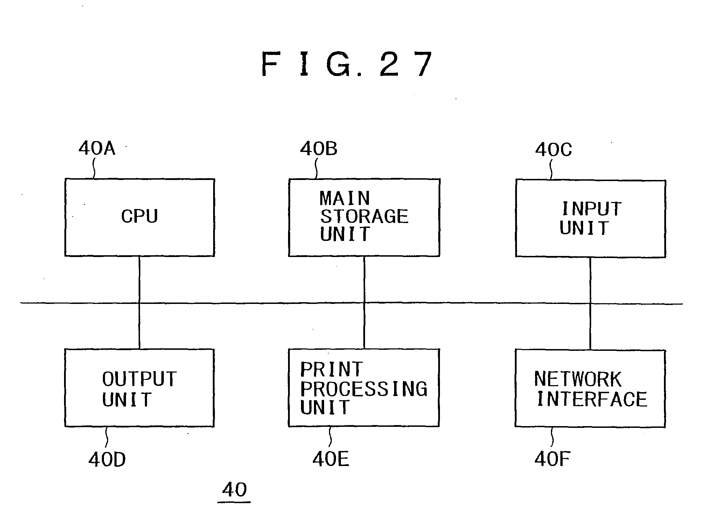

Fig. 27 indicates a typical structure of a printer 40. The printer 40 includes a central processing unit (CPU) 40A, a main storage unit 40B, an input unit 40C, an output unit 40D, a print processing unit 40E, and a network interface 40F. As illustrated, a computer constitutes the signal processing unit of the printer 40. The printer 40 has its print processing unit 40E controlled in operation by the computer.

The main storage unit 40B is typically a memory device such as a ROM (Read Only Memory) or a RAM (Random Access Memory). The main storage unit 40B accommodates firmware that defines the basic operations of the printer. The above-mentioned capability of responding to search requests is encoded as part of the firmware.

The input unit 40C is constituted by a number of buttons furnished on the printer enclosure. The simplest and the most conspicuous of the buttons is a Power button. Where copier and fax features are included, a Copy button, dial buttons, and other related buttons are also provided.

The output unit 40D is made up of indicator lamps and a display furnished on the printer enclosure and serves to inform the use of current printer status. The print processing unit 40E is composed of a print mechanism and a print controller. The print mechanism is constituted primarily by a sheet feeder and a sheet delivery mechanism, and additionally by a head drive mechanism if the printer is designed to drive its print head. The print controller carries out control operations to convert raw print data into print-ready patterns.

The network interface 40F serves to communicate with a computer connected to the printer via the network. The printer receives a search request and responds to that request through the network interface 40F. The printer also receives print data through the network interface 40F.

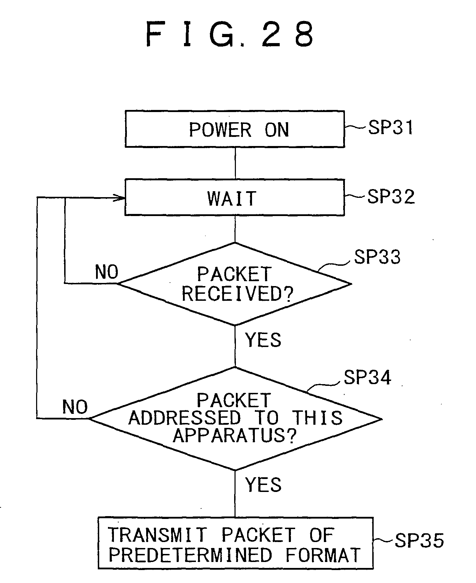

Fig. 28 is a flowchart of steps constituting a processing procedure carried out by the firmware of the printer 40. This procedure is executed when the computer 30 is installed. In step SP31, the CPU 40A starts the firmware upon power-on. Following firmware activation, the CPU 40A goes to step SP32 and waits for a packet to be received over the network.

In step SP33, the CPU 40A determines whether any packet is received. If no packet is found to be received, the CPU 40A returns to step SP32. This routine operation is repeated until the CPU 40A verifies the receipt of a packet.

When a packet is found to be received in step SP33, the CPU 40A goes to step SP34 and determines whether the received packet is a packet asking this network printer to respond. With this embodiment, the CPU 40A determines specifically whether the packet contains a character string "Find¥nPrinter¥n." If the received packet is not found to include the character string, the CPU 40A returns to step SP32. The CPU 40A repeats this routine operation until the character string in question is detected.

When a packet with the appropriate character string is detected in step SP34, the CPU 40A goes to step SP35. In step SP35, the CPU 40A transmits a packet of a predetermined format to the computer 30 having originated the search request. For example, the CPU 40A transmits a packet having data "Model : L-50¥nRev:99999999¥nName:api¥n" to the source having issued the request. In the data, the part "Model:L-50" denotes the model name of the printer, and the part "Rev:99999999" represents the version of the firmware. The version information about the firmware is useful for installing an optimal drive program. The part "Name:api" in the packet data indicates a printer name (friendly name) .

### GUI

A GUI display that appears on the computer screen will now be described. The operations to be described below take place illustratively when the printer 40 is installed into a computer 30 connected anew to the network, or when a printer 40 newly connected to the network is installed into the computer 30. It is assumed that the computer 30 and printer 40 incorporate the capabilities described above.

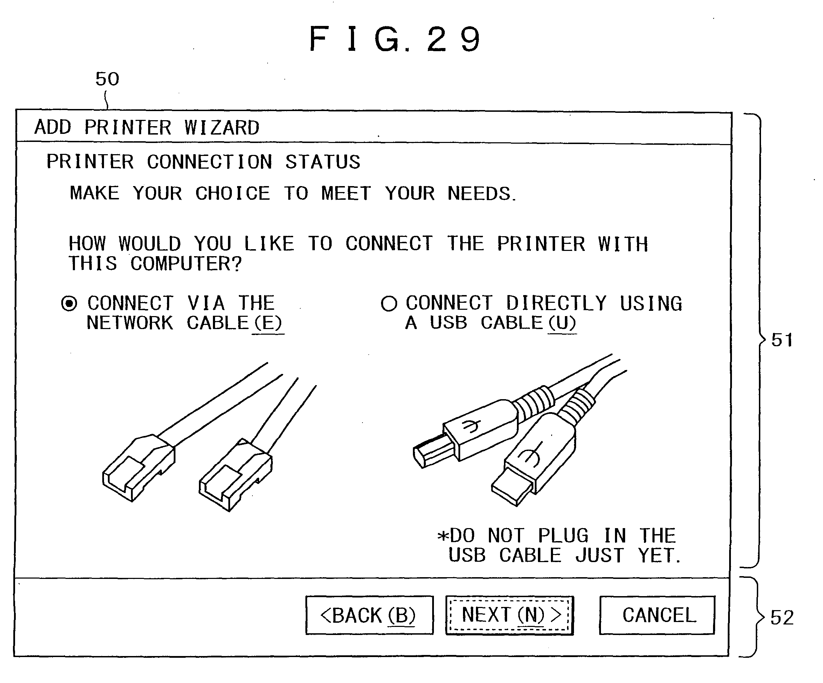

The installer is started illustratively when the CD-ROM carrying the program is loaded into the computer 30. A screen display appears on the computer allowing the user to verify the program execution in progress. When an "Install printer driver" button is clicked on the display, a wizard screen 50 shown in Fig. 29 appears.

The wizard screen 50 has two areas 51 and 52. The area 51 is where the user selects the cable by which to connect the computer with the printer. There are two optional connections: via the network cable, or through a USB cable. The selection is made on a radio button basis. The area 52 indicates the buttons for finalizing the choice or for changing screens.

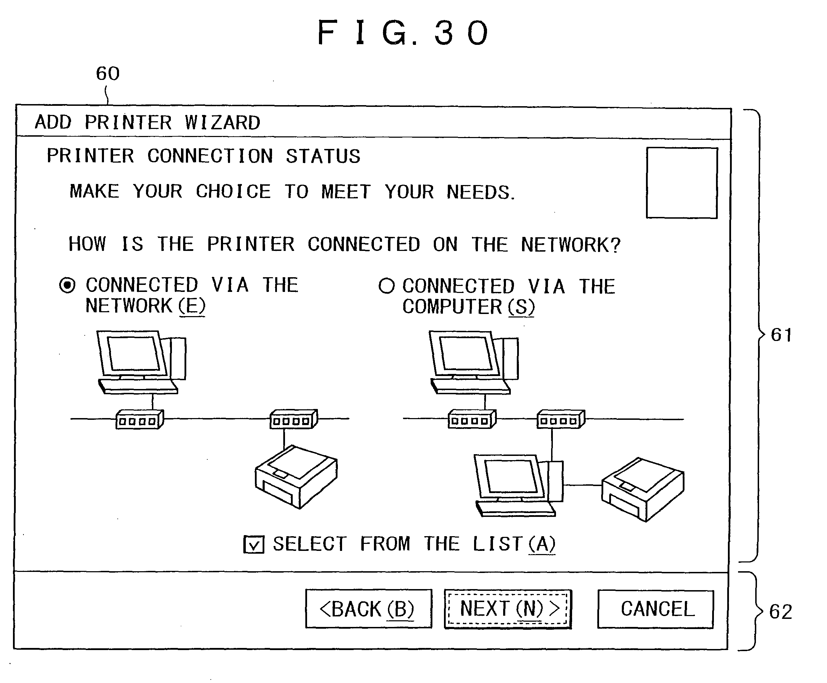

If the network cable is selected on the wizard screen 50, the installer causes a wizard screen 60 shown in Fig. 30 to appear. The wizard screen 60 also has two areas 61 and 62. The area 61 is where the user specifies how the printer is connected with the network.

There are two optional printer connections: via the network, or through the computer. The selection is also made on a radio button basis. If the printer is connected to the network by way of the computer, installation work different from what is described below needs to be carried out because broadcast packets do not reach the printer through the computer-mediated connection. The area 62 indicates the buttons for finalizing the choice or for changing screens.

The area 61 also indicates a radio button by which the user determines whether or not to select the printer to be installed from a list display. It is assumed here that the button for selecting the network-mediated printer connection and the button for selecting the printer from the list function work on a radio button basis. If the printer 40 directly connected to the computer 30 carries out its communication through the network cable or the like, the printer is regarded as directly connected to the network.

With the above state reached, the user designates the installation process to proceed. In turn, the installer broadcasts a character string such as "Find¥nPrinter¥n" over the network and waits for responses. Every time a packet of a predetermined format is received, the installer retrieves identification information from the received packet and adds the information to the list being created. The installer further acquires an IP address from the header of the packet and adds the address to the list together with the identification information.

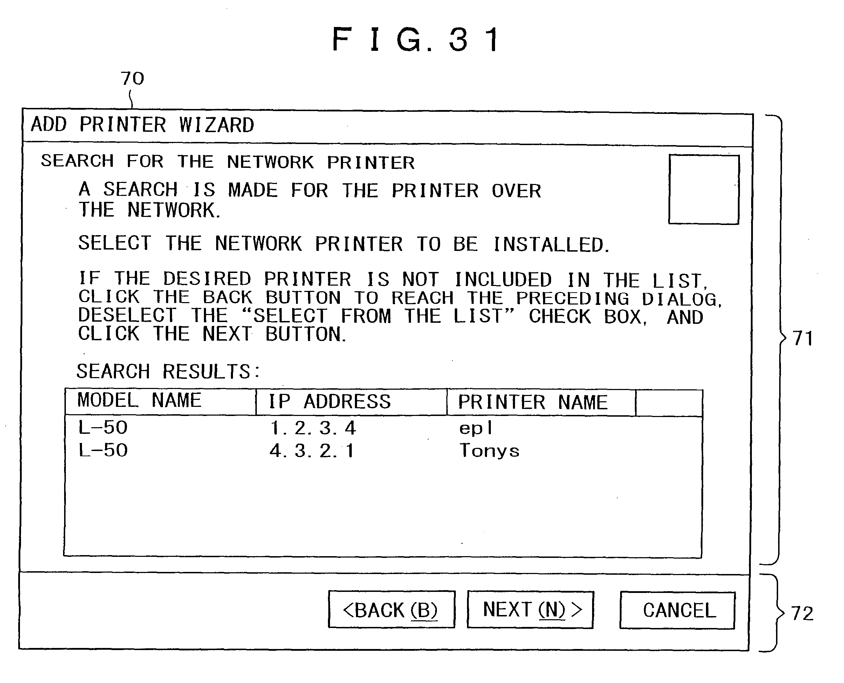

Upon elapse of a predetermined time period following the broadcast of the packet, the installer causes a wizard screen 70 shown in Fig. 31 to be displayed. The wizard screen 70 has two areas 71 and 72. The area 71 displays a list of automatically detected network printers. In the example of Fig. 31, two network printers are shown connected with the network.

What is displayed in the area 71 differs significantly from the conventional installation screen (Fig. 2). On the installation screen of Fig. 2, it was necessary to input an IP address and a port name directly. By contrast, there is no need for the user to enter any information through the screen of Fig. 31. Illustratively, the "IP address" field already indicates correct values acquired from the received packets. The character strings appearing in the "Model name" field and "Printer name" (friendly name) field are the character strings usually indicated on the printer enclosure. The screen display thus allows the user easily to identify and select the desired printer to be installed.

The area 72 indicates the buttons for finalizing the choice or for changing screens. When the user finalizes what has been selected by operating the appropriate button in the area 72, the installer calls up a preparatory screen for copying the driver file. After this, the user need only designate the installation process to proceed, thereby completing the series of the installing operations involved.

If the list in Fig. 31 has no printer, there is a possibility that the printer in question is not compatible with the automatic search capability. In that case, the printer needs to be installed manually by following the steps discussed earlier.

### Effects of the embodiments

The above-described printer 30 collects identification information about network printers through a broadcast operation. It takes an appreciably shorter time to collect the information through the broadcast than by resorting to the TCP/IP communication procedure. With TCP/IP in effect, the necessary information cannot be obtained unless and until a correct IP address is input. With the broadcast, by contrast, there is no need to input IP addresses in order to collect the information. Users not familiar with IP addresses can thus collect the information they need unfailingly.

The above-mentioned computer 30 causes installable printers 40 to be displayed in list form along with their identification information. Users are generally familiar with such identification information and can readily verify what is displayed visually. That means users not familiar with IP addresses can still have the printer installed with confidence.

The above-described printer 40 is capable of responding to broadcast search requests and sending its identification information in response to such requests. That is, the printer 40 can get its identification information displayed in the list that appears on the computer screen indicating installable printers.

### Other embodiments

The embodiments above were shown applicable when the printer 40 is installed into the computer 30. However, this is not limitative of the invention. Alternatively, the invention may be applied where any other image processing apparatus is installed into the computer. The invention also applies to a wide range of network apparatuses incorporating the responding capability described above.

With the above embodiments in use, the model name, version name, and printer name (friendly name) of the printer of interest were shown transmitted to the computer 30. Alternatively, only one of these names may be transmitted. As another alternatively, a company name may be sent as identification information.

With the above-described embodiments, information for list form display was shown transmitted as identification information. Alternatively, the computer 30 may be equipped with an identification information converting capability whereby the necessary information is created and displayed in list form. Illustratively, the model name may be converted to a friendly name or a company name for list display. As another alternative, the user may be allowed to select the item or items to be displayed in the list. When the user is allowed to choose the desired items for list form display, the user will find the installer much easier to operate than ever.

As many apparently different embodiments of this invention may be made without departing from the spirit and scope thereof, it is to be understood that the invention is not limited to the specific embodiments thereof except as defined in the appended claims.

## Claims

1. A network apparatus connected to an information processing apparatus over a network, said network apparatus comprising:
a determining section for determining whether a search request including said network apparatus as an object of search is received; and
a responding section which, if the received search request is found to include said network apparatus as said object of search, then transmits identification information about said network apparatus to a source having issued said search request.

2. The network apparatus according to claim 1, wherein said identification information constitutes a model name.

3. The network apparatus according to claim 1, wherein said identification information constitutes a friendly name.

4. The network apparatus according to claim 1, wherein said identification information constitutes one of a manufacturer name and a vender name.

5. The network apparatus according to claim 1, further comprising a print processing section for processing print data supplied from said information processing apparatus.

6. The network apparatus according to claim 1, further comprising an image reading section for optically reading images.

7. The network apparatus according to claim 1, further comprising a projecting section for optically projecting images.

8. An identification information communicating method carried out by a network apparatus connected to an information processing apparatus over a network, said identification information communicating method comprising the steps of:
determining whether a search request including said network apparatus as an object of search is received; and
transmitting identification information about said network apparatus to a source having issued said search request if the received search request is found to include said network apparatus as said object of search.

9. A recording medium which records a program in a manner readable by a computer incorporated in a network apparatus connected to an information processing apparatus over a network, said program causing said computer to carry out the steps of:
determining whether a search request including said network apparatus as an object of search is received; and
transmitting identification information about said network apparatus to a source having issued said search request if the received search request is found to include said network apparatus as said object of search.

10. A program for causing a computer incorporated in a network apparatus connected to an information processing apparatus over a network to carry out the steps of:
determining whether a search request including said network apparatus as an object of search is received; and
transmitting identification information about said network apparatus to a source having issued said search request if the received search request is found to include said network apparatus as said object of search.

11. An information processing apparatus connected to network apparatuses over a network, said information processing apparatus comprising:
a search requesting section for broadcasting a search request to said network apparatuses over said network;
an address acquiring section which, upon receipt of responses to said search request, acquires from header information in said responses address information about the network apparatuses having responded to said search request; and
an identification information acquiring section which, upon receipt of said responses to said search request, acquires identification information about said network apparatuses having responded to said search request.

12. The information processing apparatus according to claim 11, further comprising a display controlling section for causing a display device to display a list of the acquired identification information about said network apparatuses.

13. The information processing apparatus according to claim 11, further comprising an identification information converting section for converting the acquired identification information about a given network apparatus into another identification information about said network apparatus.

14. An information processing apparatus connected to network apparatuses over a network, said information processing apparatus comprising:
a connection mode acquiring section for acquiring connection modes of said network apparatuses through a screen display; and
a list displaying section for creating a list of identification information about said network apparatuses having responded to a search request, before displaying the created list of said network apparatuses on a display device.

15. The information processing apparatus according to claim 12 or 14, further comprising a port adding section which, if one of the listed network apparatuses is selected by a user, then adds a port for communication with the selected network apparatus.

16. A connection information acquiring method carried out by an information apparatus connected to network apparatuses over a network, said connection information acquiring method comprising the steps of:
broadcasting a search request to said network apparatuses over said network;
acquiring, upon receipt of responses to said search request, from header information in said responses address information about the network apparatuses having responded to said search request; and
acquiring, upon receipt of said responses to said search request, identification information about said network apparatuses having responded to said search request.

17. A connection information displaying method carried out by an information processing apparatus connected to network apparatuses over a network, said connection information displaying method comprising the steps of:
creating a list of identification information about the network apparatuses having responded to a search request; and
causing a display device to display the created list.

18. A recording medium which records a program in a manner readable by a computer incorporated in an information processing apparatus connected to network apparatuses over a network, said program causing said computer to carry out the steps of:
broadcasting a search request to said network apparatuses over said network;
acquiring, upon receipt of responses to said search request, from header information in said responses address information about the network apparatuses having responded to said search request; and
acquiring, upon receipt of said responses to said search request, identification information about said network apparatuses having responded to said search request.

19. A recording medium which records a program in a manner readable by a computer incorporated in an information processing apparatus connected to network apparatuses over a network, said program causing said computer to carry out the steps of:
creating a list of identification information about the network apparatuses having responded to a search request; and
causing a display device to display the created list.

20. A program for causing a computer incorporated in an information processing apparatus connected to network apparatuses over a network to carry out the steps of:
broadcasting a search request to said network apparatuses over said network;
acquiring, upon receipt of responses to said search request, from header information in said responses address information about the network apparatuses having responded to said search request; and
acquiring, upon receipt of said responses to said search request, identification information about said network apparatuses having responded to said search request.

21. A program for causing a computer incorporated in an information processing apparatus connected to network apparatuses over a network to carry out the steps of:
creating a list of identification information about the network apparatuses having responded to a search request; and
causing a display device to display the created list.
